# EUROPÄISCHE PATENTSCHRIFT

(11) **EP 3 135 538 B1**
(45) Veröffentlichungstag und Bekanntmachung des Hinweises auf die Patenterteilung: **26.09.2018**
(21) Anmeldenummer: 16185399.9
(22) Anmeldetag: 23.08.2016
(51) Int. Cl.: B60R 1/06, F16B 21/06

(54) **SICHTSYSTEM FÜR FAHRZEUGE**
VISION SYSTEM FOR VEHICLES
SYSTEME DE VISION POUR VEHICULES

(30) Priorität: 24.08.2015 DE 102015216145
(43) Veröffentlichungstag der Anmeldung: 01.03.2017
(73) Patentinhaber: MEKRA LANG GmbH & Co. KG, 91465 Ergersheim (DE)
(72) Erfinder: Lang, Werner Dr., 91465 Ergersheim (DE); Hecht, Georg, 91629 Weihenzell (DE); Popp, Albrecht, 91629 Weihenzell (DE)
(74) Vertreter: Winter, Brandl, Fürniss, Hübner, Röss, Kaiser, Polte - Partnerschaft mbB

(56) Entgegenhaltungen:
- WO-A1-01/92669
- DE-A1- 4 416 348
- DE-U1- 29 808 871
- JP-A- 2007 278 374
- US-A- 5 662 375

## Beschreibung

Die Erfindung betrifft ein Sichtsystem für Fahrzeuge nach dem Oberbegriff des Anspruchs 1.

In Sichtsystemen für Fahrzeuge und Kraftfahrzeuge wie Spiegelsysteme oder Kamerasysteme, müssen verschiedene Komponenten oder Bauteile miteinander verbunden werden. Hierzu sind verschraubte, verschnappte, verklebte, verschweißte oder auch genietete Verbindungen bekannt. Schraubverbindungen sind teuer, montageintensiv und schränken die gestalterische, geometrische Freiheit der Außenhülle des Sichtsystems ein. Schnappverbindungen, wie sie z. B. aus der DE 10 2008 046 981 B4 bekannt sind, sind zudem bei Kunststoffteilen nicht klimabeständig und es besteht die Gefahr, dass sich diese Verbindungen unbeabsichtigt lösen.

Aus der DE 93 10 678 U ist ein Sichtsystem für Fahrzeuge bekannt, bei dem ein erstes und ein zweites Bauteil über ein elastisches Bauteil an dem ersten Bauteil, das in ein Eingriffsteil in dem zweiten Bauteil eingreift, miteinander verbunden werden. Durch das Sicherungselement wird das elastische Element in Eingriff mit dem Eingriffselement fixiert, so dass eine dauerhafte und stabile Verbindung vorliegt. Das Sicherungselement verhindert sicher, dass sich die Schnappverbindung aufgrund von Alterungsprozessen unbeabsichtigt löst. Darüber hinaus ermöglicht das Sicherungselement eine leicht lösbare und wieder verbindbare Schnappverbindung. Vergleichbare Verbindungssystem sind auch aus der WO 01/92669 A1, der DE44 16 348 A1, der US 5 662 375 A, der JP 2007-278374 A1 und der DE 298 08 871 U bekannt. Nachteilig bei diesen bekannten Systemen ist es, dass mehr als zwei Bauteile nicht ohne weiteres miteinander verbunden werden können.

Ausgehend von der DE 93 10 678 U ist es daher Aufgabe der vorliegenden Erfindung ein Sichtsystem für Fahrzeuge anzugeben, bei dem die einzelnen Bauteile kostengünstig, klimabeständig und auf einfache Art und Weise miteinander verbunden sind.

Die Lösung dieser Aufgabe erfolgt durch die Merkmale des Anspruchs 1.

Durch das Sicherungselement wird das elastische Element in Eingriff mit dem Eingriffselement fixiert, so dass eine dauerhafte und stabile Verbindung vorliegt. Das Sicherungselement verhindert sicher, dass sich die Schnappverbindung aufgrund von Alterungsprozessen unbeabsichtigt löst. Darüber hinaus ermöglicht das Sicherungselement eine leicht lösbare und wieder verbindbare Schnappverbindung. Der Austausch von Bauteilen oder Komponenten wird dadurch vereinfacht. Hierbei greifen zwei Bauteile mit ihren elastischen Elementen in ein gemeinsames Eingriffselement ein. Ein einzelnes Sicherungselement sichert dann beide elastischen Elemente in dem gemeinsamen Eingriffselement.

Durch die vorteilhafte Ausgestaltung der Erfindung nach Anspruch 2 wird eine gestalterische Freiheit für das Design des Sichtsystems ermöglicht. Bauteile aus Kunststoff lassen sich dann mittels Spritzguss in unterschiedlichsten Formen herstellen.

Gemäß der vorteilhaften Ausgestaltung nach Anspruch 3 ist das elastische Element als einfacher Schnapphaken ausgebildet, der in das Eingriffselement einhakt. Alternativ kann der Schnapphaken auch als doppelter Schnapphaken ausgebildet sein - Anspruch 4 -, der dann in Fügerichtung sowohl vorwärts als auch rückwärts im Eingriffselement fixiert ist.

Die Fügerichtung, mit der die verschiedenen Bauteile zusammengefügt werden, kann parallel zur Fügerichtung des Sicherungselements, also der Richtung entsprechen, mit der das Sicherungselement eingefügt wird - Anspruch 5. Sie kann auch quer hierzu verlaufen - Anspruch 6 - oder es kann sich auch um eine rotatorische oder Schraubbewegung bzw. Drehbewegung handeln, mit der das Sicherungselement eingefügt wird - Anspruch 7.

Gemäß der vorteilhaften Ausgestaltung nach Anspruch 8 wird das Sicherungselement bei der Herstellung einstückig mit einem der zu verbindenden Bauteile hergestellt. Das Sicherungselement verbleibt über eine Sollbruchstelle bis zur Montage mit dem jeweiligen Bauteil verbunden und wird bei der Montage abgebrochen und kann dann zur Verriegelung der Schnappverbindung dienen.

Gemäß der vorteilhaften Ausgestaltung nach Anspruch 9 handelt es sich bei dem Eingriffselement um eine Eingriffsöffnung, in der die elastischen Elemente von einer Seite her in Fügerichtung eingeführt und an der gegenüberliegend Außenseite einhaken können. Dies stellt eine einfache Ausgestaltung eines Eingriffselements dar.

Gemäß der vorteilhaften Ausgestaltung nach Anspruch 10 stützt sich im verriegelten oder gesicherten Zustand das Sicherungselement einerseits an der Rückseite des elastischen Elements und andererseits an den Rand der Eingriffsöffnung ab.

Werden mehrere Bauteile miteinander verbunden, deren elastische Elemente in eine gemeinsame Eingriffsöffnung hineinragen, kann sich das Sicherungselement in vorteilhafter Weise an den Rückseiten der einander gegenüberliegenden elastischen Elementen abstützen und damit auf einfache Weise eine Sicherung der Schnappverbindung ermöglichen - Anspruch 11.

Gemäß der vorteilhaften Ausgestaltung nach Anspruch 12 drückt das Sicherungselement in gesichertem Zustand gegen die Rückseite des elastischen Elements und verspannt dieses in bzw. an dem Eingriffselement. Hierdurch ergibt sich eine spielfreie Schnappverbindung.

Gemäß der vorteilhaften Ausgestaltung nach Anspruch 13 ist das Sicherungselement lösbar mit dem elastischen Element verbunden. Damit kann die Schnappverbindung zum Austausch von Bauteilen und Komponenten gelöst und wieder geschlossen werden.

Gemäß der vorteilhaften Ausgestaltung nach Anspruch 14 kann das Sicherungselement in Fügerichtung arretiert werden. Damit wird verhindert, dass sich das Sicherungselement durch Vibrationen löst.

Gemäß der vorteilhaften Ausgestaltung nach Anspruch 15 umfasst das Sicherungselement einen Endanschlag, so dass die Länge mit der das Sicherungselement in die zu sichernde Verbindung eingeführt wird definiert ist.

Gemäß einer weiteren vorteilhaften Ausgestaltung nach Anspruch 16 ist der Endanschlag des Sicherungselements als Demontierhilfe ausgebildet, so dass sich das Sicherungselement bei der Demontage leichter wieder entfernen und damit die Verbindung lösen lässt.

Die Sicherungselemente sind vorzugsweise leicht konisch ausgeführt, so dass beim Einfügen eine Verpressung des elastischen Elements in der Eingriffsrichtung erfolgt und sich ein Presssitz ergibt.

Weitere Einzelheiten, Merkmale und Vorteile der Erfindung ergeben sich aus der nachfolgenden Beschreibung verschiedener Ausführungsformen.

Es zeigt:
Fig. 1 eine schematische Schnittdarstellung einer ersten Ausführungsform der Erfindung in verriegeltem Zustand,
Fig. 2 eine schematische Schnittdarstellung einer zweiten Ausführungsform der Erfindung in verriegeltem Zustand,
Fig. 3 die Ausführungsform nach Fig. 2 in noch nicht verriegeltem Zustand,
Fig. 4 eine dritte Ausführungsform der Erfindung mit einem elastischen Doppelhaken in verriegeltem Zustand,
Fig. 5 eine vierte Ausführungsform der Erfindung mit einem elastischen Doppelhaken in verriegeltem Zustand,
Fig. 6 eine fünfte Ausführungsform der Erfindung in verriegeltem Zustand, und
Fig. 7 die fünfte Ausführungsform gem. Fig. 6 in noch nicht verriegeltem Zustand.

In allen nachfolgend beschriebenen Ausführungsformen werden einander entsprechende Bauteile mit gleichen Bezugszeichen bezeichnet.

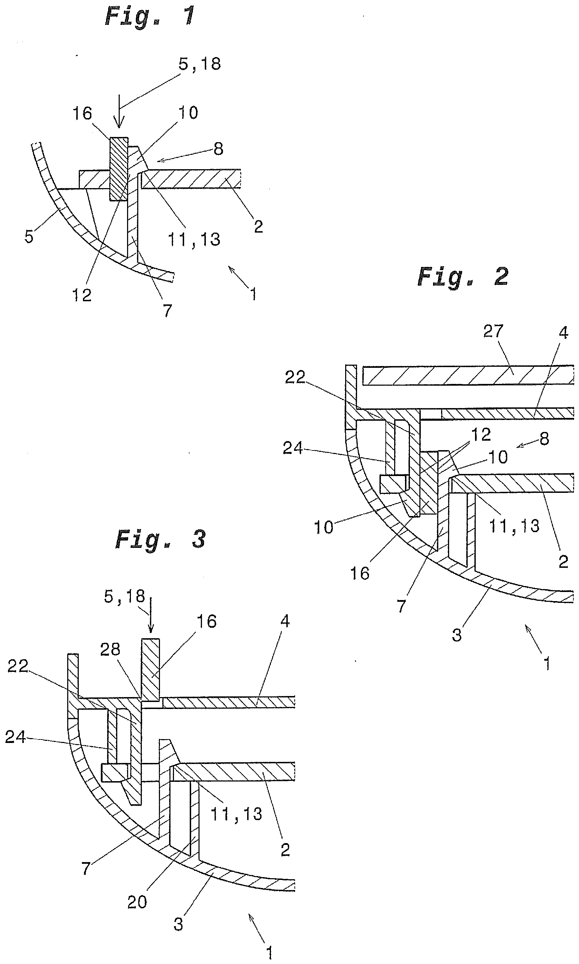

Fig. 1 zeigt eine schematische Schnittdarstellung einer ersten Ausführungsform der Erfindung, bei der in einem Sichtsystem 1 ein erstes Bauteil 2 mit einem zweiten Bauteil in Form eines Gehäuses 3 verbunden ist. Die beiden Bauteile 2 und 3 werden in einer Bauteilfügerichtigung 5 zusammengefügt. Zumindest das Gehäuse 3 besteht aus Kunststoff und wird mittels Spritzguss hergestellt. Von dem Gehäuse 3 erstreckt sich ein elastisches Element 7 in Bauteilfügerichtung 5 weg. Das elastische Element 7 umfasst eine Eingriffsseite 8 mit Hinterschnitt bzw. Schnapphaken 10 und eine der Eingriffsseite 8 gegenüberliegende Rückseite 12. Das erste plattenförmige Bauteil 2 weist ein Eingriffselement in Form einer das Bauteil 2 durchsetzenden Eingriffsöffnung 14 auf. Das elastische Element 7 durchsetzt mit dem Schnapphaken 10 von einer Seite her in Bauteilfügerichtung 5 die Eingriffsöffnung 14 und verhakt an der gegenüberliegenden Außenseite der Eingriffsöffnung 14. Von dieser gegenüberliegenden Seite her wird ein stiftförmiges Sicherungselement 16 in Sicherungselement-Fügerichtung 18 in die Eingriffsöffnung 14 des ersten Bauteils 2 eingeführt, so dass sich das Sicherungselement 16 zum einen auf der Rückseite 12 des elastischen Elements 7 und zum anderen am gegenüberliegenden Rand der Eingriffsöffnung 14 abstützt. Auf diese Weise wird der Schnapphaken bzw. der Hinterschnitt 10 daran gehindert, dass es sich von seinem Kontakt mit dem ersten Bauteil 2 lösen kann und die Schnappverbindung ist auf diese Weise verriegelt bzw. gesichert.

Die Sicherungselement-Fügerichtung 18 des Sicherungselements 16 ist parallel zur Bauteilfügerichtung 5 und dieser entgegengesetzt. Der Hinterschnitt bzw. Schnapphaken 10 umfasst eine abgeschrägte Kontaktfläche 11, die in Kontakt mit einer korrespondierenden Kontaktfläche 13 der Eingriffsöffnung 14 bzw. dem ersten Bauteil 2 steht. Durch die abgeschrägten Kontaktflächen 11,13 wird das elastische Element 7 mit der Eingriffsöffnung 14 verklemmt und es ergibt sich eine spielfreie Schnappverbindung.

Die Fig. 2 und 3 zeigen eine zweite Ausführungsform der Erfindung, bei der drei Bauteile, das erste Bauteil 2, das zweite Bauteil bzw. Gehäuse 3 und ein drittes Bauteil 4, miteinander verbunden sind. Das Gehäuse 3 greift in gleicher Weise in die Eingriffsöffnung 14 des ersten Bauteils 2 ein wie bei der ersten Ausführungsform. Ein Unterschied besteht lediglich darin, dass sich parallel zu dem elastischen Element 7 ein erstes Anschlagselement 20 von dem Gehäuse 3 parallel zu dem elastischen Element 7 erstreckt, das in zusammengefügtem Zustand mit der Unterseite des ersten Bauteils 2 in Kontakt tritt und damit die Eingriffstiefe des elastischen Elements 7 in die Eingriffsöffnung 14 festlegt.

Spiegelbildlich hierzu greift von der anderen Seite ein zweites elastisches Element 22 in die Eingriffsöffnung 14 ein. Das zweite elastische Element 22 entspricht in seinem Aufbau dem ersten elastischen Element 7 und weist ebenfalls eine Eingriffsseite 8 mit einem Schnapphaken oder Hinterschnitt 10 sowie eine Rückseite 12 auf. In gleicher Weise wie bei dem Gehäuse 3 erstreckt sich von dem dritten Bauteil 4 parallel zu dem zweiten elastischen Element 22 ein zweites Anschlagselement 24 weg. Im verriegelten Zustand kontaktiert das freie Ende des zweiten Anschlagselements 24 die Oberseite des ersten Bauteils 2 außerhalb der Eingriffsöffnung 14 und legt somit die Eingriffstiefe des zweiten elastischen Elements 22 in die Eingriffsöffnung 14 fest. Die beiden elastischen Elemente 7 und 22 greifen also aus entgegengesetzter Richtung jeweils in die Eingriffsöffnung 14 ein, durchsetzen diese und verhaken sich an gegenüberliegenden Außenseiten des ersten Bauteils 2.

Die Eingriffsöffnung 14 ist so groß ausgestaltet, dass zwischen den Rückseiten 12 der beiden elastischen Elemente 7 und 22 ein Abstand verbleibt, in der das Sicherungselement 16 eingefügt werden kann und im eingefügten Zustand in Presskonktakt mit den Rückseiten 12 der beiden elastischen Elemente 7, 22 steht. Damit das Sicherungselement 16 eingefügt werden kann umfasst das dritte Bauteil 4 eine Einführöffnung 26 in der von oben das Sicherungselement 16 eingefügt wird. Nach der Verriegelung der Verbindung zwischen den drei Bauteilen 2, 3 und 4 kann dann noch eine Sichteinrichtung z.B. in Form eines Spiegelglases 27 montiert werden.

Fig. 3 zeigt, dass das Sicherungselement 16 bei der Herstellung einstückig an das dritte Bauteil 4 angeformt wird und über eine Sollbruchstelle 28 mit dem dritten Bauteil 4 bis zur Montage verbunden bleibt. Bei der Montage der Bauteile 2,3 und 4 wird das Sicherungselement 16 dann an der Sollbruchstelle 28 von dem dritten Bauteil 4 abgebrochen und das Sicherungselement 16 wird in Sicherungselement-Fügerichtung 18 in die Eingriffsöffnung 14 eingeführt und verklemmt sich mit den Rückseiten 10 der beiden elastischen Elemente 7 und 22.

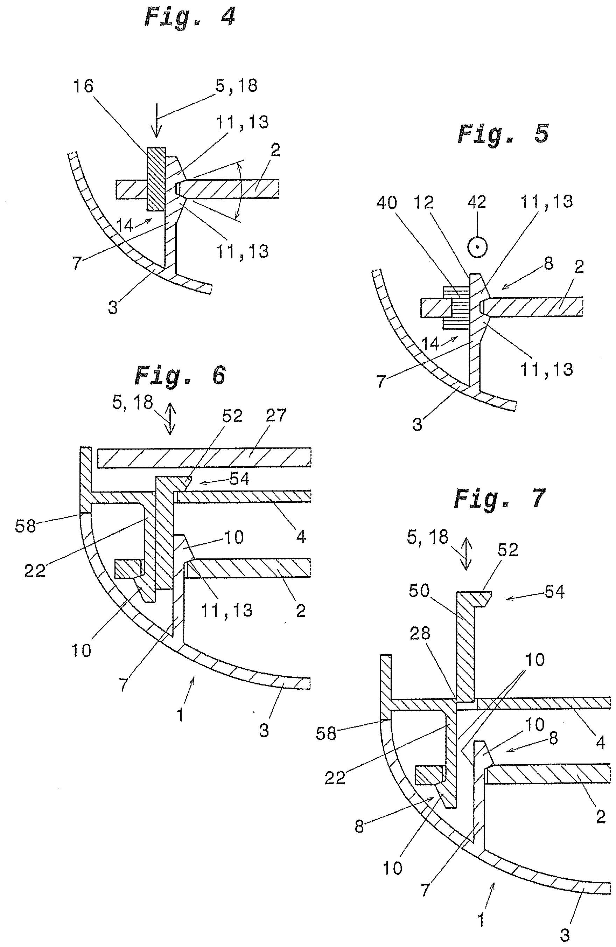

Fig. 4 zeigt eine dritte Ausführungsform der Erfindung, die sich von der ersten Ausführungsform lediglich dadurch unterscheidet, dass das elastische Element 7 einen Doppelhaken 30 aufweist. Durch diesen Doppelhaken 30 wird das elastische Element 7 in zwei Richtungen an den ersten Bauteil 2 fixiert. Der Doppelhaken 30 weist einander gegenüberliegende abgeschrägte Kontaktflächen 11 auf, die in Kontakt mit korrespondierenden abgeschrägten Kontaktflächen 13 in der Eingriffsöffnung 12 bzw. an dem ersten Bauteil 2 in Kontakt treten. Durch diese Abschrägung erfolgt eine Zentrierung bzw. Positionierung des elastischen Elements 7 bezüglich des ersten Bauteils 2 in einer definierten Lage. Das Sicherungselement 16 wird in gleicher Weise wie bei der Ausführungsform nach Fig. 1 Sicherungselement-Fügerichtung 18 in die Eingriffsöffnung 14 eingeführt und verkantet den Doppelhaken 30 in der Eingriffsöffnung 14 in Vorwärts- und in Rückwärtsrichtung. Durch das Einfügen des Sicherungselements 40 wird der Doppelhaken 30 an die Kontraktflächen 13 in der Eingriffsöffnung 14 gepresst. Durch diesen Presssitz wird erfolgt nicht nur ein Formschluss, sondern auch ein Kraftschluss zwischen Doppelhaken 30 und Eingriffsöffnung 14.

Fig. 5 zeigt eine vierte Ausführungsform der Erfindung, die sich von der Ausführungsform nach Fig. 4 lediglich in der Ausgestaltung des Sicherungselements 40 unterscheidet. Bei der vierten Ausführungsform ist das Sicherungselement 40 im Querschnitt U-förmig ausgebildet und es wird in einer Sicherungselement-Fügerichtung 42 quer zur Fügerichtung 5 der Bauteile in die Eingriffsöffnung 14 eingeführt. Durch den U-förmigen Querschnitt ist das Sicherungselement 40 in Bauteilfügerichtung 5 arretiert. Auch hier erfolgt durch den Presssitz nicht nur ein Formschluss, sondern auch ein Kraftschluss zwischen Doppelhaken 30 und Eingriffsöffnung 14.

Die Fig. 6 und 7 zeigen eine fünfte Ausführungsform der Erfindung in einer den Fig. 2 und 3 entsprechenden Darstellung. Die Ausführungsform nach Fig. 6 und 7 unterscheidet sich von der zweiten Ausführungsform gemäß Fig. 2 und 3 in der Ausgestaltung des Sicherungselements 50 sowie in dem Fehlen der Anschlagselemente 20 und 24. Das Sicherungselement 50 weist an einem Ende einen rechtwinkligen Anschlag 52 auf, dessen freies Ende 54 abgeschrägt ist. Durch den Anschlag 52 wird in verriegeltem Zustand die Eindringtiefe des Sicherungselements 50 in die Eingriffsöffnung 14 festgelegt. Dabei ist der Anschlag 52 bzw. die Länge des Sicherungselements 50 so gewählt, dass das von dem Anschlag 52 abgewandte Ende 56 des Sicherungselements 50 weit genug in die Eingriffsöffnung 12 hineinragt. Das abgeschrägte freie Ende 54 des Anschlags 52 dient als Demontagehilfe zum Herauswuchten des Sicherungselements 50, wenn ein Bauteil 2, 3, 4 ausgetauscht werden soll.

Die Sicherungselemente 16, 40, 50 sind leicht konisch ausgeführt, so dass beim Einfügen eine Verpressung erfolgt und sich ein Presssitz ergibt.

Die Anschlagselemente 20 und 24 erübrigen sich bei der fünften Ausführungsform, da das zweite und dritte Bauteil 3, 4 über einen Bauteilanschlag 56 in Kontakt treten und die Eindringtiefe der elastischen Elemente 7, 22 festlegt.

Bei allen vorbeschriebenen Ausführungsformen werden zumindest das Gehäuse 3 und das dritte Bauteil 4 aus Kunststoff mittels Spritzguss hergestellt.

### Bezugszeichenliste:

- 1: Sichtsystem
- 2: erstes Bauteil
- 3: zweites Bauteil, Gehäuse
- 4: drittes Bauteil
- 5: Bauteilfügerichtung
- 7: elastisches Element
- 8: Eingriffsseite
- 10: Schnapphaken, Hinterschnitt von 7, 22
- 11: abgeschrägte Kontaktfläche
- 12: Rückseite von 7, 22
- 13: korrespondierende Kontaktflächen
- 14: Eingriffselement, Eingriffsöffnung
- 16: Sicherungselement
- 18: Sicherungselement-Fügerichtung

- 20: erstes Anschlagselement
- 22: zweites elastisches Element
- 24: zweites Anschlagselement
- 26: Einführöffnung für 16
- 27: Sichteinrichtung, Spiegelglas
- 28: Sollbruchstelle

- 30: Doppelhaken an 7

- 40: Sicherungselement, U-förmiger Querschnitt
- 42: Sicherungselement-Fügerichtung

- 50: Sicherungselement
- 52: Anschlag
- 54: abgeschrägtes freies Ende von 52
- 56: vom Anschlag 42 abgewandtes Ende von 50
- 58: Bauteilanschlag

## Patentansprüche

1. Sichtsystem (1) für Fahrzeuge, mit
einem ersten Bauteil (2), das ein Eingriffselement (14) umfasst,
einem zweiten Bauteil (3), das wenigstens ein sich in Bauteilfügerichtung (5) erstreckendes elastisches Element (7; 22) umfasst, das eine Eingriffsseite (8) mit Hinterschnitt (10) und eine der Eingriffsseite (8) gegenüberliegende Rückseite (12) aufweist,
wobei das elastische Element (7; 22) mit der Eingriffsseite (8) in das Eingriffselement (14) eingreift, und
einem Sicherungselement (16; 40; 50), das im eingegriffenen Zustand das elastische Element (7; 22) an dem Eingriffselement (14) verriegelt,
**dadurch gekennzeichnet,**
**dass** ein drittes Bauteil (4) vorgesehen ist, das wenigstens ein weiteres sich in Bauteilfügerichtung (5) erstreckendes elastisches Element (22) umfasst, das eine Eingriffsseite (8) mit Hinterschnitt (10) und eine der Eingriffsseite (8) gegenüberliegende Rückseite (12) aufweist,
**dass** das wenigstens eine weitere elastische Element (22) in das Eingriffselement (14) des ersten Bauteils (2) eingreift, und
**dass** das Sicherungselement (16; 40; 50) im eingegriffenen Zustand beide elastischen Elemente (7, 22) an dem Eingriffselement (14) verriegelt.

2. Sichtsystem nach Anspruch 1, **dadurch gekennzeichnet, dass** das erste oder zweite Bauteil (2, 3) ein Gehäuse ist und aus Kunststoff besteht.

3. Sichtsystem nach einem der vorhergehenden Ansprüche, **dadurch gekennzeichnet, dass** das elastische Element (7) ein Schnapphaken ist.

4. Sichtsystem nach Anspruch 3, **dadurch gekennzeichnet, dass** das elastische Element (7) ein doppelter Schnapphaken ist.

5. Sichtsystem nach einem der vorhergehenden Ansprüche, **dadurch gekennzeichnet, dass** die Eingriffsrichtung (18) des Sicherungselements (16; 50) parallel der Fügerichtung (5) der Bauteile ist.

6. Sichtsystem nach einem der vorhergehenden Ansprüche 1 bis 4, **dadurch gekennzeichnet, dass** die Eingriffsrichtung (42) des Sicherungselements (40) quer zur Fügerichtung (5) der Bauteile (2, 3, 4) ist.

7. Sichtsystem nach einem der vorhergehenden Ansprüche, **dadurch gekennzeichnet, dass** die Eingriffsrichtung des Sicherungselements (16; 40; 50) rotatorisch verläuft.

8. Sichtsystem nach einem der vorhergehenden Ansprüche, **dadurch gekennzeichnet, dass** das Sicherungselement (16) bei der Herstellung einstückig mit einem der Bauteile (4) ausgebildet ist und bis zur Montage der Bauteile (2, 3, 4) über eine Sollbruchstelle (28) mit dem einen Bauteil (4) verbunden bleibt.

9. Sichtsystem nach einem der vorhergehenden Ansprüche, **dadurch gekennzeichnet, dass** das Eingriffselement (14) eine Eingriffsöffnung in dem ersten Bauteil (2) ist.

10. Sichtsystem nach Anspruch 9, **dadurch gekennzeichnet, dass** das Sicherungselement (16; 40; 50) in die Eingriffsöffnung (14) hineinragt und in Kontakt mit der Rückseite des wenigstens einen elastischen Elements (7; 22) steht.

11. Sichtsystem nach Anspruch 9 oder 10, **dadurch gekennzeichnet, dass** bei drei Bauteilen das Sicherungselement in Kontakt mit den Rückseiten der elastischen Elemente ist, die in eine gemeinsame Eingriffsöffnung eingreifen.

12. Sichtsystem nach einem der vorhergehenden Ansprüche, **dadurch gekennzeichnet, dass** das Sicherungselement (16; 40; 50) in gesichertem Zustand gegen das elastische Element (7; 22) verspannt ist.

13. Sichtsystem nach einem der vorhergehenden Ansprüche, **dadurch gekennzeichnet, dass** das Sicherungselement (16; 40; 50) in gesichertem Zustand lösbar mit dem oder den elastischen Element(en) (7; 22) verbunden ist.

14. Sichtsystem nach einem der vorhergehenden Ansprüche, **dadurch gekennzeichnet, dass** das Sicherungselement (16; 40; 50) in gesichertem Zustand in Sicherungselement-Fügerichtung (18; 42) arretierbar ist.

15. Sichtsystem nach einem der vorhergehenden Ansprüche, **dadurch gekennzeichnet, dass** das Sicherungselement (50) einen Endanschlag (52) aufweist.

16. Sichtsystem nach Anspruch 15, **dadurch gekennzeichnet, dass** der Endanschlag (52) des Sicherungselements (50) als Demontagehilfe ausgebildet ist.

## Claims

1. Visualization system (1) for vehicles, having
a first element (2), which comprises an engagement element (14),
a second element (3), which comprises at least one elastic element (7, 22) extending in the element fitting direction (5), which has an engagement side (8) with an undercut (10), and a rear side (12) lying opposite of the engagement side (8),
wherein the elastic element (7, 22) engages with the engagement side (8) into the engagement element (14), and
a securing element (16; 40; 50), which locks the elastic element (7, 22) at the engagement element (14) in the engaged state,
**characterized in that**
a third element (4) is provided, which comprises at least one additional elastic element (22) extending in the element fitting direction (5), which has an engagement side (8) with an undercut (10), and a rear side (12) lying opposite of the engagement side (8),
that the at least one additional elastic element (22) engages into the engagement element (14) of the first element (2), and
that the securing element (16; 40; 50) locks both elastic elements (7, 22) at the engagement element (14) in the engaged state.

2. Visualization system according to claim 1, **characterized in that** the first or second element (2, 3) is a housing and is made of plastic.

3. Visualization system according to one of the preceding claims, **characterized in that** the elastic element (7) is a snap-fit hook.

4. Visualization system according to claim 3, **characterized in that** the elastic element (7) is a double snap-fit hook.

5. Visualization system according to one of the preceding claims, **characterized in that** the engagement direction (18) of the securing element (16; 50) runs in parallel to the fitting direction (5) of the elements.

6. Visualization system according to one of the preceding claims 1 to 4, **characterized in that** the engagement direction (42) of the securing element (40) runs transversely to the fitting direction (5) of the elements (2, 3, 4).

7. Visualization system according to one of the preceding claims, **characterized in that** the engagement direction of the securing element (16; 40; 50) runs rotationally.

8. Visualization system according to one of the preceding claims, **characterized in that** the securing element (16) is formed in one piece with one of the elements (4) during production and stays connected with said element (4) via a predetermined breaking point (28) until assembly of the elements (2, 3, 4).

9. Visualization system according to one of the preceding claims, **characterized in that** the engagement element (14) is an engagement aperture in the first element (2).

10. Visualization system according to claim 9, **characterized in that** the securing element (16; 40; 50) protrudes into the engagement aperture (14) and contacts the rear side of the at least one elastic element (7, 22).

11. Visualization system according to claim 9 or 10, **characterized in that**, for three elements, the securing element contacts the rear sides of the elastic elements which engage into a common engagement aperture.

12. Visualization system according to one of the preceding claims, **characterized in that** the securing element (16; 40; 50) is braced against the elastic element (7, 22) in the secured state.

13. Visualization system according to one of the preceding claims, **characterized in that** the securing element (16; 40; 50) is releasably connected with the elastic element(s) (7; 22) in the secured state.

14. Visualization system according to one of the preceding claims, **characterized in that** the securing element (16; 40; 50) can be arrested in the secured state in the securing-element fitting direction (18; 42).

15. Visualization system according to one of the preceding claims, **characterized in that** the securing element (50) comprises an end stop (52).

16. Visualization system according to claim 15, **characterized in that** the end stop (52) of the securing element (50) is formed as a dismantling aid.

## Revendications

1. Système de vision (1) pour véhicules, comprenant
une première pièce (2), qui comporte un élément d'insertion (14),
une deuxième pièce (3), qui comporte au moins un élément élastique (7 ; 22) s'étendant dans la direction d'assemblage de pièce (5), lequel élément présente une face d'insertion (8) pourvue d'un dégagement (10) et une face arrière (12) opposée à la face d'insertion (8),
dans lequel l'élément élastique (7 ; 22) s'insère par la face d'insertion (8) dans l'élément d'insertion (14), et
un élément de blocage (16 ; 40 ; 50), qui, dans l'état inséré, verrouille l'élément élastique (7 ; 22) sur l'élément d'insertion (14),
**caractérisé**
**en ce qu'**une troisième pièce (4) est prévue, qui comporte au moins un autre élément élastique (22) s'étendant dans la direction d'assemblage de pièce (5), lequel élément présente une face d'insertion (8) pourvue d'un dégagement (10) et une face arrière (12) opposée à la face d'insertion (8),
**en ce que** le au moins un autre élément élastique (22) s'insère dans l'élément d'insertion (14) de la première pièce (2), et
**en ce que** l'élément de blocage (16 ; 40 ; 50), dans l'état inséré, verrouille les deux éléments élastiques (7, 22) sur l'élément d'insertion (14).

2. Système de vision selon la revendication 1, **caractérisé en ce que** la première ou deuxième pièce (2, 3) est un boîtier et est constituée de matière plastique.

3. Système de vision selon l'une quelconque des revendications précédentes, **caractérisé en ce que** l'élément élastique (7) est un crochet à déclic.

4. Système de vision selon la revendication 3, **caractérisé en ce que** l'élément élastique (7) est un double crochet à déclic.

5. Système de vision selon l'une quelconque des revendications précédentes, **caractérisé en ce que** la direction d'insertion (18) de l'élément de blocage (16 ; 50) est parallèle à la direction d'assemblage (5) des pièces.

6. Système de vision selon l'une quelconque des revendications 1 à 4, **caractérisé en ce que** la direction d'insertion (42) de l'élément de blocage (40) est transversale à la direction d'assemblage (5) des pièces (2, 3, 4).

7. Système de vision selon l'une quelconque des revendications précédentes, **caractérisé en ce que** la direction d'insertion de l'élément de blocage (16 ; 40 ; 50) s'étend en rotation.

8. Système de vision selon l'une quelconque des revendications précédentes, **caractérisé en ce que** l'élément de blocage (16), lors de la fabrication, est réalisé d'une seule pièce avec une des pièces (4) et reste relié à l'une des pièces (4) par l'intermédiaire d'un point de rupture (28) jusqu'au montage des pièces (2, 3, 4).

9. Système de vision selon l'une quelconque des revendications précédentes, **caractérisé en ce que** l'élément d'insertion (14) est une ouverture d'insertion dans la première pièce (2).

10. Système de vision selon la revendication 9, **caractérisé en ce que** l'élément de blocage (16 ; 40 ; 50) fait saillie dans l'ouverture d'insertion (14) et est en contact avec la face arrière du au moins un élément élastique (7 ; 22) .

11. Système de vision selon la revendication 9 ou 10, **caractérisé en ce que**, pour les trois pièces, l'élément de blocage est en contact avec les faces arrière des éléments élastiques, qui s'insèrent dans une ouverture d'insertion commune.

12. Système de vision selon l'une quelconque des revendications précédentes, **caractérisé en ce que** l'élément de blocage (16 ; 40 ; 50) dans l'état bloqué, est serré contre l'élément élastique (7 ; 22).

13. Système de vision selon l'une quelconque des revendications précédentes, **caractérisé en ce que** l'élément de blocage (16 ; 40 ; 50) dans l'état bloqué est relié de manière détachable à l'élément élastique ou aux éléments élastiques (7 ; 22).

14. Système de vision selon l'une quelconque des revendications précédentes, **caractérisé en ce que** l'élément de blocage (16 ; 40 ; 50) dans l'état bloqué, peut être arrêté dans la direction d'assemblage d'élément de blocage (18 ; 42).

15. Système de vision selon l'une quelconque des revendications précédentes, **caractérisé en ce que** l'élément de blocage (50) comprend une butée finale (52).

16. Système de vision selon la revendication 15, **caractérisé en ce que** la butée finale (52) de l'élément de blocage (50) est réalisée sous la forme d'une aide au démontage.
